# EUROPÄISCHE PATENTSCHRIFT

(11) **EP 3 402 583 B1**
(45) Veröffentlichungstag und Bekanntmachung des Hinweises auf die Patenterteilung: **21.10.2020**
(21) Anmeldenummer: 17700177.3
(22) Anmeldetag: 09.01.2017
(51) Int. Cl.: B01D 1/16, B01D 1/26, B01D 3/00, B01D 5/00, C02F 1/04

(54) **NIEDER-TEMPERATUR-DESTILLATIONSANLAGE**
LOW-TEMPERATURE DISTILLATION PLANT
INSTALLATION DE DISTILLATION À BASSE TEMPÉRATURE

(30) Priorität: 12.01.2016 CH 412016
(43) Veröffentlichungstag der Anmeldung: 21.11.2018
(73) Patentinhaber: Thermal Purification Technologies Limited, 5033 Buchs (CH)
(72) Erfinder: LEHMANN, Markus, 5610 Wohlen (CH)
(74) Vertreter: Schneider Feldmann AG Patent- und Markenanwälte
(86) Internationale Anmeldenummer: PCT/EP2017/050346
(87) Internationale Veröffentlichungsnummer: WO 2017/121703

(56) Entgegenhaltungen:
- WO-A1-2008/122136
- WO-A1-2008/122137
- WO-A1-2012/156646
- WO-A1-2015/048878
- WO-A1-2015/114342

## Beschreibung

### Technisches Gebiet

Die Erfindung betrifft eine Nieder-Temperatur-Destillationsanlage (LTD Anlage) mit einer oder mehreren Stufen verschiedener Mitteltemperaturen Tᵢ, zur Destillierung einer Mischflüssigkeit zu einer reinen Flüssigkeit, wobei jede Stufe einen Verdampfer mit einem Dampfraum und mit einer wärmeren Tᵢ+ΔT einbringbaren Mischflüssigkeit sowie einen Kondensor mit einem Dampfraum und mit einer kühleren Tᵢ-ΔT einsprühbaren reinen Flüssigkeit aufweist. Die Dampfräume des Verdampfers und des Kondensors sind derart durch Dampfverbindungen miteinander zu einem gemeinsamen Dampfraum verbunden, dass sich der Druck und die Temperatur darin jederzeit ungehindert ausgleichen können.

### Stand der Technik

Destillationsanlagen werden insbesondere, aber nicht nur, zur Reinigung von Wasser eingesetzt. Dabei wird beispielsweise aus mit Salz oder Schmutzstoffen verunreinigtem Wasser, hier Mischwasser genannt, sauberes, reines Wasser bereitgestellt, indem das Mischwasser unter Wärmezufuhr verdampft und anschliessend wieder kondensiert wird. Zurück bleibt eine Sole oder eingedicktes Mischwasser mit einem höheren Anteil an Schmutzstoffen.

In der WO 2008/122136 wird eine so genannte Nieder-Temperatur-Destillationsanlage oder Low-Temperature Destillation (LTD) Anlage beschrieben, welche sich dadurch auszeichnet, dass der Energiebedarf viel geringer ist als bei herkömmlichen Anlagen. Dies wird dadurch erreicht, indem die Dampfräume von Verdampfer und Kondensor derart zu einem gemeinsamen Dampfraum verbunden sind, dass sich Druck und Temperatur darin jederzeit ungehindert ausbreiten können. Die in den Dampfraum verdampferseitig eingebrachte Mischflüssigkeit ist mit Tᵢ+ΔT nur wenige Grade (ΔT ist etwa 0.5-4°C) wärmer als die in den Dampfraum kondensorseitig eingesprühte reine Flüssigkeit, wobei der Druck Pᵢ im Dampfraum dem Sättigungsdampfdruck der Mitteltemperatur Tᵢ zwischen der Mischflüssigkeit und der reinen Flüssigkeit entspricht. Die etwas kühlere eingespritzte reine Flüssigkeit fördert zwangsläufig die Kondensation des Dampfes, der aus der etwas wärmeren Mischflüssigkeit durch Verdampfung entsteht. Der Dampf aus dem Verdampfer kondensiert an den feinen kühleren Tröpfchen der eingesprühten Flüssigkeit im Kondensor, die schliesslich dort aufgefangen werden. Die aufgefangenen Flüssigkeiten im Verdampfer und im Kondensor weisen die erwähnte Mitteltemperatur Tᵢ auf. Wichtig ist, dass am Ende des Kondensationsweges nicht kondensierbare Gase aus dem Kondensor abgesaugt werden, da sie den Druck im Dampfraum ungünstig beeinflussen und den Prozess verlangsamen. Eine Temperatur- und Drucküberwachung im Dampfraum regelt dieses Absaugen sparsam.

In der genannten Schrift ist auch ein mehrstufiges Verfahren angegeben, bei dem mehrere Stufen verschiedener Mitteltemperaturen nacheinander angeordnet sind. So kann insgesamt ein grösseres Temperaturgefälle ausgenutzt werden, das beispielsweise als Abwärme einer vorhandenen Industrieanlage zur Verfügung steht.

Um die richtigen Anfangstemperaturen zu erreichen, wird die saubere Flüssigkeit vor dem Eintritt in den Kondensor gekühlt und die Ausgangsflüssigkeit vor Eintritt in den Verdampfer erwärmt. Selbst wenn die Temperaturen in den Kammern derart optimiert werden, dass mittels Wärmetauschern ein Kühlen der einen Flüssigkeit zum gleichzeitigen Wärmen einer anderen Flüssigkeit genutzt werden kann, so fehlt stets Energie, um eine einseitig erhöhte Anfangstemperatur resp. eine Differenz ΔT der Anfangstemperaturen zu schaffen.

Es ist das stete Bestreben, den Energieaufwand zum Betreiben einer solchen Anlage zu reduzieren. Energie wird einerseits in einer mehrstufigen LTD Anlage benötigt, um die Flüssigkeiten zu den Verdampfern oder Kondensoren der nächsten Stufe zu transportieren und mit dem erforderlichen Druck zu beaufschlagen, sowie um die nicht kondensierbaren Gase abzusaugen. Eine Optimierung in dieser Hinsicht ist nicht Aufgabe der vorliegenden Erfindung.

Andererseits wird Energie benötigt, um die Flüssigkeiten auf die erforderlichen Temperaturen zu erwärmen resp. abzukühlen. Viele LTD Anlagen werden in der Nähe von Industrieanlagen betrieben, die Abwärme produzieren, die ansonsten nicht weiter genutzt werden kann. Solche Industrieanlagen, beispielsweise Kraftwerke, werden oft an Flüssen oder anderen Gewässern gebaut, deren Temperaturen durch die Kühlung der Industrieanlage merklich steigen, was oft unerwünscht ist. Insbesondere Abwärme von weniger als 100°C kann oft nicht sinnvoll resp. wirtschaftlich genutzt werden und belastet daher die Umwelt. Glücklicherweise eignet sich das LTD Verfahren ausserordentlich gut für die Verwendung solch niedriger Temperaturen, wodurch die Betriebskosten der LTD Anlagen dank der Nutzung solcher Abwärme sehr niedrig ausfallen.

Es werden aber auch Anlagen zum Destillieren von Flüssigkeiten an Orten benötigt, an denen keine Abwärme zur Verfügung steht. In diesen Fällen fliessen die Kosten für die benötigte Energie zur Erreichung der jeweils geforderten Temperaturen der Flüssigkeiten in die Betriebskosten ein.

In der WO 2015/048878 A1 ist eine Anlage beschrieben, welche in wesentlichen Teilen gleich aufgebaut ist wie die in der WO 2008/122136 beschriebene. Zur Erzeugung resp. Aufrechterhaltung der nötigen Anfangstemperaturen werden die beiden Flüssigkeiten, sauberes und verunreinigtes Wasser, aus ihren Reservoirs mit Umgebungstempertaturen abgepumpt und in zwei Wärmetauschern auf die nötigen, unterschiedlichen Temperaturen gebracht. Die Wärmetauscher werden mit einer zirkulierenden Temperierflüssigkeit in einem separaten Kreislauf betrieben, die, unter Verwendung eines Kompressors und einem Ventil, jeweils erwärmt resp. abgekühlt wird. Nachteilig an dieser Anordnung ist, dass eine solche Anlage sehr energieintensiv arbeitet.

In der WO 2015/114342 ist ein mehrstufiges Destillationsverfahren beschrieben, das ebenfalls nach dem oben genannten Prinzip arbeitet. Jede Verdampferstufe ist mit einer entsprechenden Kondensorstufe dampfverbunden, wobei im mehrstufigen Verfahren der Kondensorkreislauf gegenläufig zum Verdampferkreislauf zirkuliert. Auch hier wird, am Ende des Destillationsverfahrens, in einem Wärmetauscher Wärmeenergie aus dem sauberen Wasser des Ausflusses der wärmsten Kondensorstufe in das verschmutzte Wasser aus dem Ausfluss der kühlsten Kondensorstufe gebracht. Die Wärme, die zusätzlich dazu noch ins System eingebracht werden muss, erfolgt in einem zweiten Kreislauf mit einem Wärmetauscher, der mit einer Energiequelle versorgt wird und ein zusätzliches Fluid umfasst. Das verschmutzte Wasser wird dort weiter erhitzt, bis es die richtige Temperatur hat, um wieder in den ersten, heissesten Verdampfer eingeleitet zu werden. Diese zusätzliche Energie ist etwa gleich viel wie beim letzten dargestellten Verfahren. In den Verbindungen der Dampfräume aller Stufen sind Ventilatoren angebracht, welche den Dampftransport von den Dampfräumen der Verdampfer in diejenigen der Kondensoren fördern. Diese haben den nachteiligen Effekt, dass sie den optimalen Prozessbedingungen entgegenwirken, wodurch der Prozess in allen Kammern verlangsamt wird.

In der WO 2012/156646 ist ein weiteres Destillationsverfahren dieser Art beschrieben. Die Energiezufuhr geschieht auch hier durch eine Wärmequelle, welche die verschmutzte Flüssigkeit erwärmt, bevor diese in den Verdampfer eingelassen wird. Zusätzlich zum für den Prozess üblichen Gasfluss vom Verdampfer zum Kondensor ist hier ein Gasfluss vom Kondensor zum Verdampfer vorgesehen, der durch einen Ventilator angetrieben werden muss. Nachteilig an diesem ist sicherlich, dass der bereits saubere Dampf wieder mit der verschmutzten Flüssigkeit vermischt wird und dadurch mindestens teilweise kondensiert. Dies erhöht den Energiebedarf zusätzlich und bremst den Destillationsprozess. Die erforderliche Wärme zur Erzeugen der heissen Mischflüssigkeiten werden durch Heizungen erreicht.

### Darstellung der Erfindung

Es ist die Aufgabe der vorliegenden Erfindung, eine LTD Anlage eingangs und nach dem Stand der Technik beschriebenen Art derart zu verbessern, dass deren Energiebedarf zum Temperieren der Flüssigkeiten auf die jeweils geforderten Temperaturen reduziert wird.

Die Aufgabe wird gelöst durch die Kennzeichen des unabhängigen Patentanspruchs. Die erfindungsgemässe LTD Anlage weist eine LTD Anlage nach dem Stand der Technik auf, umfassend zusätzlich mindestens eine Aggregatseinrichtung, eine Unterkühlkammer, eine Überhitzekammer sowie einen Wärmetauscher, wobei diese Komponenten wie folgt in der LTD Anlage angeschlossen sind: Die Aggregatseinrichtung ist eingangsseitig mit dem Dampfraum der Unterkühlkammer verbunden, wobei in die Unterkühlkammer aufgefangene Mischflüssigkeit aus einem Verdampfer einbringbar, bei mehreren Verdampfern aus dem der kühlsten Stufe ist. Ausgangsseitig ist die Aggregatseinrichtung mit dem Dampfraum der Überhitzekammer verbunden, wobei in die Überhitzekammer aufgefangene reine Flüssigkeit aus einem Kondensor, bei mehreren Kondensoren aus dem der wärmsten Stufe einsprühbar ist. Zudem ist die Aggregatseinrichtung mit einer Energiequelle verbunden, zum Abkühlen der Temperatur in der Unterkühlkammer und zum Erhitzen der Temperatur in der Überhitzekammer. Während dem Prozess strömt Dampf von der Unterkühlkammer über die Aggregatseinrichtung zur Überhitzekammer. Der Wärmetauscher ist zwischen den Ausgängen der Unterkühlkammer und der Überhitzekammer angeordnet, zum Abkühlen der heissen aufgefangenen reinen Flüssigkeit aus der Überhitzekammer als Eingang in einen Kondensor, bei mehreren Kondensoren in den der kühlsten Stufe, sowie zum Erhitzen der kalten aufgefangenen Mischflüssigkeit aus der Unterkühlkammer als Eingang in einen Verdampfer, bei mehreren Verdampfern in den der wärmsten Stufe.

Die der Erfindung zugrunde liegende Idee besteht darin, dass die LTD Anlage erfindungsgemäss eine Aggregatseinrichtung umfasst, welche die erforderliche Temperaturdifferenz erzeugt, die zwischen dem kältesten Kondensor und dem wärmsten Verdampfer benötigt wird. Dazu werden entsprechende aufgefangene Flüssigkeiten aus dem kühlsten Verdampfer und dem wärmsten Kondensor entnommen und noch mehr gekühlt resp. erhitzt: Die bereits kühle Mischflüssigkeit wird in der Unterkühlkammer weiter abgekühlt und die bereits warme reine Flüssigkeit wird in der Überhitzekammer weiter erhitzt. Die Unterkühlkammer sowie die Überhitzekammer sind mit ihren jeweiligen Dampfräumen mit der Aggregatseinrichtung dampfverbunden, die ihrerseits verschiedenartig ausgestaltet sein kann. Insbesondere kann sie eine oder mehrere Sorptionskammern enthalten oder den Temperaturunterschied mittels einer Strahldüse oder eines Kompressors resp. einer Vakuumpumpe erzeugen. Der aus der Unterkühlkammer in die Aggregatskammer eingeströmte Dampf kann dort zwischenzeitlich seinen Aggregatszustand ändern, bevor er aus der Aggregatskammer wieder in Form von Dampf in die Überhitzekammer eingeströmt und dort erneut kondensiert wird.

Kalte Mischflüssigkeit und heisse reine Flüssigkeit stehen nun in den Auffangbecken der Unterkühlkammer und der Überhitzekammer zur Verfügung. Als Eingänge in die LTD Anlage wird aber heisse Mischflüssigkeit und kalte reine Flüssigkeit benötigt. Aus diesem Grund ist ein Wärmetauscher mit einer Gegenstromeinrichtung zwischen den Flüssigkeitsausgängen der Unterkühlkammer und der Überhitzekammer angeordnet, damit die Wärme von der heissen reinen Flüssigkeit auf die kalte Mischflüssigkeit abgegeben werden kann, sodass die geforderten Temperaturen der entsprechenden Flüssigkeiten erreicht werden.

Im weiteren Gegensatz zu den Anlagen nach dem Stand der Technik wird die benötigte Energie dem System in einer Dampfkammer zugeführt und nicht in einer Flüssigkeitsleitung. Die Aggregatseinrichtung, welche für die Energiezufuhr in dieser Dampfleitung verantwortlich ist, erzeugt direkt die Temperaturdifferenz zwischen den Dampfräumen von Unterkühlkammer und Überhitzekammer und arbeitet mit einem hohen Wirkungsgrad.

Anlagen nach dem Stand der Technik benötigen jeweils eine Energiequelle, welche die verschmutzte Flüssigkeit vor dem Eintritt in den ersten resp. heissesten Verdampfer auf die nötige Temperatur erwärmt. Dies geschieht in den genannten Anlagen durch zirkulierende Flüssigkeit in einem Wärmetauscher, welche ihre Wärme auf die verschmutzte Flüssigkeit abgeben oder durch Heizungen. Die Wirkungsgrade solcher Wärmetauscher sind aber relativ gering.

### Kurze Beschreibung der Zeichnungen

Im Folgenden wird die Erfindung mit Bezug auf die Zeichnungen näher erklärt. Es zeigen
- Fig. 1a, b: eine schematische Darstellung einer Nieder-Temperatur Destillationsanlage (LTD Anlage nach dem Stand der Technik: a) in einfachster Ausführung; b) mehrstufig;
- Fig. 2: eine schematische Darstellung einer erfindungsgemässen LTD Anlage in einfachster Form;
- Fig. 3a-d: Aggregatseinrichtungen, ausgestaltet als a) Sorptionskammer, kontinuierlich arbeitend; b) Sorptionskammer, diskontinuierlich arbeitend; c) Kompressor/Vakuumpumpe; d) Strahldüse;
- Fig. 4: eine schematische Darstellung einer erfindungsgemässen mehrstufigen LTD Anlage.

### Wege zur Ausführung der Erfindung

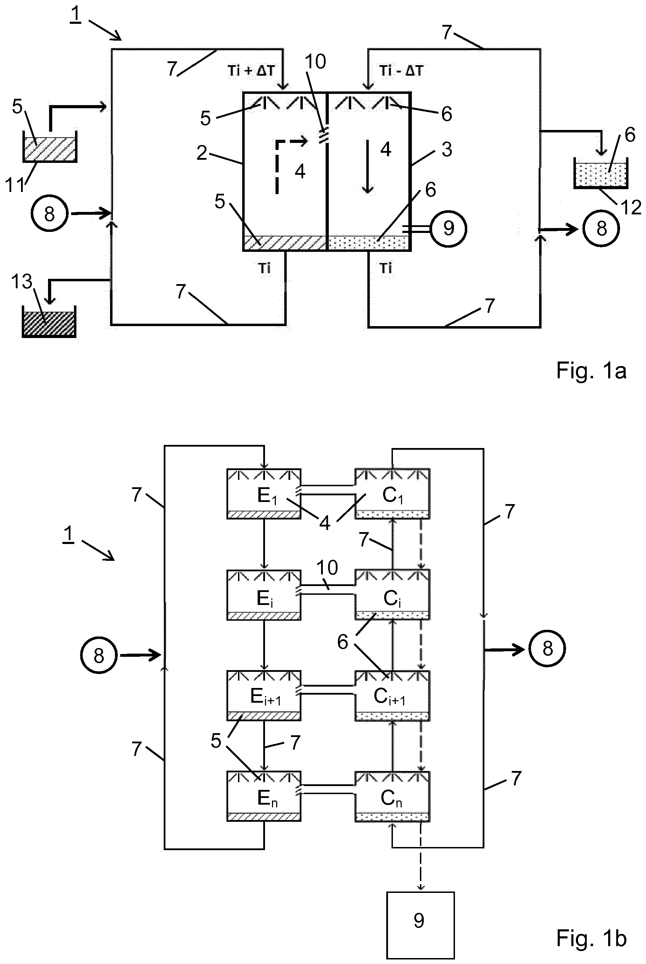

Die Fig. 1a zeigt eine schematische Darstellung einer Nieder-Temperatur Destillationsanlage (LTD Anlage) 1 nach dem Stand der Technik als einfachste Ausführung mit nur einer Stufe. Sie umfasst einen Verdampfer 2 mit einem Dampfraum 4, in den Mischflüssigkeit 5, die zu destillieren ist, eingebracht werden kann um zu verdampfen. Nicht verdampfte Mischflüssigkeit 5 wird im Verdampfer 2 auch wieder aufgefangen. Die LTD Anlage umfasst zudem einen Kondensor 3 mit einem Dampfraum 4, in den reine Flüssigkeit 6, die dem Destillat der Mischflüssigkeit 5 entspricht, eingesprüht werden kann, um kleinste Tröpfchen zu bilden, an denen Dampf kondensieren kann. Diese Tröpfchen werden schliesslich wieder im Kondensor 3 als reine Flüssigkeit 6 aufgefangen. Die Dampfräume 4 von Verdampfer 2 und Kondensor 3 sind jeweils derart durch eine Dampfverbindung 10 zu einem gemeinsamen Dampfraum 4 miteinander verbunden, dass sich Druck und Temperatur darin jederzeit ungehindert ausbreiten können. Der gemeinsame Dampfraum 4 verbindet somit den Verdampfer 2 mit dem Kondensor 3.

In der Darstellung nach Fig. 1 werden beide Flüssigkeiten 5, 6 in den Dampfraum 4 eingesprüht, wobei die Mischflüssigkeit 5 mit Tᵢ+ΔT wenige Grade wärmer ist als die reine Flüssigkeit 6 mit Tᵢ-ΔT. Der Druck im Dampfraum 4 entspricht dabei dem Sättigungsdruck Pᵢ der Mitteltemperatur Tᵢ der beiden Flüssigkeiten 5, 6. In Folge der physikalischen Verhältnisse im Dampfraum 4 verdampft die Mischflüssigkeit 5 und verbreitet sich bis in den Kondensor-Bereich des Dampfraums 4. Dort trifft der Dampf auf die fein versprühten, kühleren Tröpfchen der reinen Flüssigkeit 6, kondensiert daran, fällt und wird schliesslich am Boden des Kondensors 3 aufgefangen. Die nicht verdampfte Mischflüssigkeit 5 fällt ebenfalls und wird am Boden des Verdampfers 2 aufgefangen. Die Temperaturen der aufgefangenen Flüssigkeiten 5, 6 sind etwa gleich hoch und entsprechen der Mitteltemperatur Tᵢ deren Ausgangstemperaturen. Leitungen 7 entnehmen die aufgefangenen Flüssigkeiten 5, 6, denen dann mittels Energiequelle resp. Wärmesenke 8, Wärme zu- resp. abgeführt wird, um die Mischtemperatur wieder auf T+ΔT zu erwärmen und die reine Flüssigkeit 6 wieder auf T-ΔT abzukühlen. Die temperierten Flüssigkeiten 5, 6 werden in Leitungen 7 wieder in den Verdampfer 2 eingebracht resp. in den Kondensor 3 eingesprüht. So entstehen zwei Kreisläufe, ein Verdampferkreislauf und ein Kondensorkreislauf.

Der Prozess läuft kontinuierlich weiter. Ein Vorratsbecken 11 mit Mischflüssigkeit 5 sorgt für Nachschub, in ein Endbecken 12 kann die gewonnene reine Flüssigkeit 6 als Destillat abgegeben werden, und dem Verdampfungskreislauf wird Sole oder eingedickte Mischflüssigkeit 13 entnommen, die einen höheren Anteil an Salzen oder Schmutzstoffen aufweist als die Mischflüssigkeit 5 aus dem Vorratsbecken 11. Gegebenenfalls müssen nicht kondensierbare Gase am Ende des Kondensationsweges mittels einer Absaugvorrichtung 9 aus dem Kondensor 3 abgesaugt werden, damit der Prozess optimal läuft.

Fig. 1b zeigt eine LTD Anlage 1 mit mehreren, beispielsweise n Stufen, wobei in dieser Abbildung n=4 ist. Sie weist n Paare von Verdampfern 2 und Kondensoren 3 auf, die hier mit E₁, ..., Eₙ resp. C₁, ..., Cₙ bezeichnet sind, mit jeweils verschiedenen Mitteltemperaturen Tᵢ, i=1, 2, ... n. Der Verdampferkreislauf beginnt bei der heissesten Stufe E₁, wonach jede Leitung 7 aus einem Verdampfer Eᵢ Mischflüssigkeit zum Verdampfer Eᵢ₊₁ der nächst kühleren Stufe bringt, um dort eingebracht oder eingesprüht zu werden. Die Mischflüssigkeit 5 aus dem kühlsten Verdampfer Eₙ wird anschliessend durch eine Energiequelle 8 erwärmt und erneut in den wärmsten Verdampfer E₁ eingebracht oder eingesprüht. Der Kondensorkreislauf läuft gegenläufig zum Verdampferkreislauf. Der Kondensorkreislauf beginnt bei der kühlsten Stufe Cₙ, wonach jede Leitung 7 aus einem Kondensor Cᵢ reine Flüssigkeit 6 zum Kondensor Cᵢ₋₁ der nächst wärmeren Stufe bringt, um dort eingesprüht zu werden. In der Figur wurde aus Übersichtsgründen darauf verzichtet, die Leitungen 7 zu den Einsprühdüsen resp. von den Auffangbecken weg zu führen. Die reine Flüssigkeit 6 aus dem wärmsten Kondensor C₁ wird anschliessend mittels einer Wärmesenke 8 abgekühlt und erneut in den kühlsten Kondensor Cₙ eingesprüht.

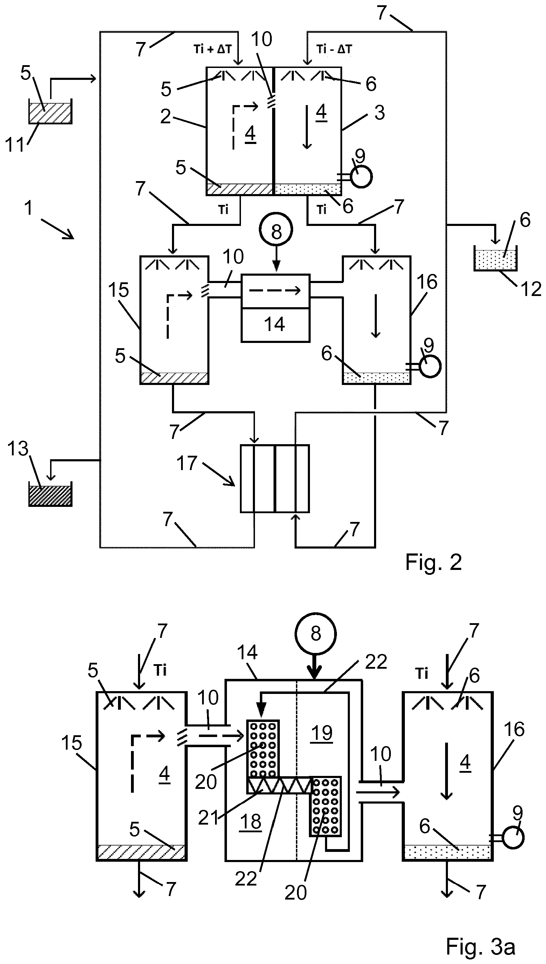

Eine einfache, einstufige Ausführung einer erfindungsgemässen LTD Anlage 1 ist in Fig. 2 dargestellt. Der prinzipielle Destillationsprozess läuft gleich wie jener nach dem Stand der Technik. Die Referenzzeichen bezeichnen jeweils dieselben Komponenten.

Die erfindungsgemässe LTD Anlage 1 einfachster Art weist nur eine Stufe auf mit einer Mitteltemperatur Tᵢ, zur Destillierung einer Mischflüssigkeit 5 zu einer reinen Flüssigkeit 6. Sie umfasst einen Verdampfer 2 mit einer um ΔT wärmeren, einbringbaren Mischflüssigkeit 5 und einen Kondensor 3 mit einer um ΔT kühleren, einsprühbaren reinen Flüssigkeit 6 sowie miteinander durch eine Dampfverbindung 10 verbundene Dampfräume 4, in denen sich Druck und Temperatur von Verdampfer und Kondensor jederzeit ungehindert ausgleichen können. Leitungen 7 bilden einen Verdampferkreislauf und einen Kondensorkreislauf aus, wie in der Ausführung gemäss dem Stand der Technik beschrieben.

Der wesentliche Unterschied der erfindungsgemässen Anlage gegenüber einer LTD Anlage 1 nach dem Stand der Technik besteht darin, dass die Energiequelle 8 und Wärmesenke 8 durch andere Komponenten ersetzt und miteinander verbunden sind. Eine Aggregatseinrichtung 14 bildet das Kernstück der erfindungsgemässen LTD Anlage, umgeben von einer Unterkühlkammer 15, einer Überhitzekammer 16 und einem Wärmetauscher 17. Die Aggregatseinrichtung 14 ist eingangsseitig mit dem Dampfraum der Unterkühlkammer 15 verbunden, wobei in die Unterkühlkammer 15 aufgefangene Mischflüssigkeit 5 aus dem Verdampfer 2 einbringbar ist. Ausgangsseitig ist sie mit dem Dampfraum der Überhitzekammer 16 verbunden, wobei in die Überhitzekammer 16 aufgefangene reine Flüssigkeit 6 aus dem Kondensor 3 einsprühbar ist. Diese Verbindungen sind, im Gegensatz zu den Leitungen 7, in denen Flüssigkeiten fliessen, Dampfverbindungen 10, die mit entsprechend grossem Durchmesser ausgestaltet sind, um einen guten Druckausgleich zur Aggregatseinrichtung 14 zu gewährleisten. In diesen Dampfverbindungen 10 strömt zusätzlich zur eigentlichen Destillationsanlage Dampf von der Unterkühlkammer 15 über die Aggregatseinrichtung 14 zur Überhitzekammer 16, in welcher der Dampf wieder kondensiert wird. Die Aggregatseinrichtung 14 ist mit einer Energiequelle 8 verbunden und sorgt für die Abkühlung der Temperatur in der Unterkühlkammer 15 und die Erhitzung der Temperatur in der Überhitzekammer 16.

Ein Wärmetauscher 17 ist zwischen den Ausgängen der Unterkühlkammer 15 und der Überhitzekammer 16 angeordnet. Er sorgt für das Abkühlen der heissen, aufgefangenen reinen Flüssigkeit 6 aus der Überhitzekammer 16, die durch Leitungen 7 gekühlt zum Eingang in den Kondensor 3 geleitet werden. Zudem sorgt der Wärmetauscher 17 für das Erhitzen der kalten, aufgefangenen Mischflüssigkeit 5 aus der Unterkühlkammer 15, die durch Leitungen 7 erwärmt zum Eingang in den Verdampfer 2 geleitet werden.

Die Leitungen 7 laufen im Wärmetauscher 17 gegenläufig, sodass ein maximaler Temperaturaustausch der beiden Flüssigkeiten 5, 6 ermöglicht wird.

Der Vorteil der vorliegenden Erfindung besteht darin, dass insgesamt weniger Energie von aussen zugefügt und auch weniger Wärme abgeführt werden muss, um die erforderliche Temperaturdifferenz von (n+1)·ΔT zu erreichen, wobei n die Anzahl der Stufen bei mehrstufigen Anlagen angibt. Die Energiequelle 8 und Wärmesenke 8 für die Abkühlung und Erwärmung der Flüssigkeiten aus dem Stand der Technik wurden hierfür zusammengefasst, wodurch Wärme in den Prozess zurückgeführt wird. Zudem ergibt sich eine grössere Produktivität, da zusätzlich Dampf aus dem Verdampferkreislauf über die Aggregatseinrichtung 14 in den Kondensorkreislauf befördert wird.

Es ist zu beachten, dass der Aufbau eines Verdampfers 2, eines Kondensors 3, einer Unterkühlkammer 15 und einer Überhitzekammer 16 prinzipiell identisch sein kann. Die Flüssigkeiten 5, 6 können in allen Ausführungen eingesprüht werden. Zudem umfasst jede der genannten Kammern 2, 3, 15, 16 einen Dampfraum 4 und ein unteres Auffangbecken zum Auffangen der eingebrachten Flüssigkeiten, eine obere Zuleitung 7 zur Einsprühanlage, eine untere Ableitung 7 aus dem Auffangbecken und eine Dampfverbindung 10 zum resp. aus dem Dampfraum 4, als Verbindung zu einem anderen Dampfraum 4 oder zur Aggregatseinrichtung 14. Alternativ dazu kann die Mischflüssigkeit 5 auch auf andere Art in einen Verdampfer 2 oder in die Unterkühlkammer eingebracht werden, ein Einsprühen ist nicht zwingend. Andererseits vereinfacht die Vereinheitlichung der Kammern 2, 3, 15, 16 die erfindungsgemässe LTD Anlage 1.

In einer bevorzugten Ausgestaltung der Erfindung umfasst die Aggregatseinrichtung 14 mindestens eine Sorptionskammer 18 und/oder Desorptionskammer 19 mit einem Sorbens 20. Unter den Begriff Sorption fällt jede Art von Aufnahme eines Stoffes an der Oberfläche eines anderen Stoffes oder in einem anderen Stoff, dem sogenannten Sorbens. Insbesondere umfasst die Sorption die Adsorption, die Aufnahme an einem Feststoff, sowie die Absorption, die Aufnahme durch eine Flüssigkeit. Die Desorption beschreibt den Umkehrprozess der Sorption und lässt den sorbierten Stoff wieder frei. Während eine Sorption dem aufzunehmenden Stoff Wärme entzieht, fügt die Desorption dem abgegebenen Stoff wieder ebenso viel Wärme zu. Diese Prozesse erlauben es demnach, eine grosse Temperaturdifferenz zwischen dem Ausgangsstoff und dem Endstoff zu erzeugen, was im vorliegenden Fall wünschenswert ist.

Dabei kann Dampf aus dem Dampfraum der Unterkühlkammer im Sorbens 20 sorbiert werden und Dampf aus dem Sorbens 20 unter Zuführung von Energie 8 desorbiert werden, der schliesslich in den Dampfraum 4 der Überhitzekammer 16 zugeführt werden kann. Mit einer solchen Einrichtung kann erst eine Sorption durchgeführt werden, wobei nur die Dampfverbindung 10 zur Unterkühlkammer 15 offen ist, bis das Sorbens 20 mit angereichertem Dampf gesättigt ist, der an der Oberfläche des Sorbens 20 kondensiert. Die Dampfverbindung 10 zur Überhitzekammer 16 bleibt in dieser Phase geschlossen. In einer anschliessenden Phase wird nur die Dampfverbindung 10 zur Überhitzekammer 16 geöffnet und die andere Dampfverbindung 10 zur Unterkühlkammer 15 wieder geschlossen. Unter Zufuhr von Wärme wird nun reine Flüssigkeit 6 wieder aus der Oberfläche des Sorbens 20 verdampft und durch die Dampfverbindung 10 zum Dampfraum 4 der Überhitzekammer 16 gebracht, wo er erneut an den fein gesprühten Tröpfchen niederer Temperatur kondensiert und schliesslich im Becken aufgefangen wird.

In Fig. 3a ist eine bevorzugte Anordnung mit einem Sorbens 20 dargestellt. In dieser umfasst die Aggregatseinrichtung 14 je eine separate Sorptionskammer 18 und Desorptionskammer 19, wobei beide durch mindestens einen Verbindungskanal 21 miteinander verbunden sind. Transporteinrichtungen 22 sind für den Hin- und Rücktransport des Sorbens 20 zwischen der Sorptionskammer 18 und der Desorptionskammer 19 vorgesehen. Eine solche Anordnung kann kontinuierlich arbeiten, indem Sorbens 20 in Portionen oder rieselnd je nach Sättigungsstand durch den Verbindungskanal 21 zwischen der Sorptionskammer 18 und der Desorptionskammer 19 hin- und her transportiert wird.

In einer verbesserten Anordnung sind die Sorptionskammer 18 und die Desorptionskammer 19 durch mindestens zwei Verbindungskanäle 21 miteinander verbunden, die im Gebrauch stets dichtend mit durchrieselndem Sorbens 20 gefüllt sind. Unter Mithilfe von Transporteinrichtungen 22 kann so ein stufenloser Sorptions- und Desorptionsprozess durchgeführt werden, wobei das Sorbens 20 in einem Kreislauf die Sorptionskammer 18 und die Desorptionskammer 19 passiert.

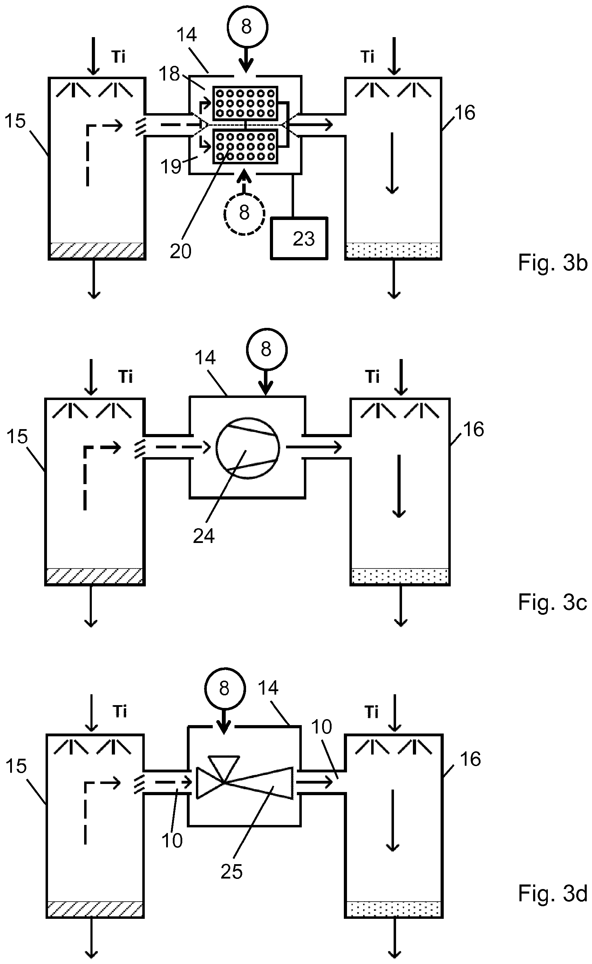

Andererseits kann, wie in Fig. 3b dargestellt, in der Sorptions- und Desorptionskammer 18, 19 jeweils abwechselnd ein Sorptions- und Desorptionsprozess durchgeführt werden. Dazu wird unter Mithilfe einer Steuereinrichtung 23 die Funktionen von Sorptionskammer 18 und Desorptionskammer 19 periodisch getauscht, indem die Steuereinrichtung 23 die Dampfverbindungen 10 zur Unterkühlkammer 15 resp. zur Überhitzekammer 16 mit der jeweiligen Sorptionskammer 18 resp. Desorptionskammer 19 alternieren kann. Die Energiequelle 8 ist stets mit der jeweiligen Desorptionskammer 19 verbunden.

Bei Sättigung des Sorbens 20 in der Sorptionskammer 18 und vollständiger Trocknung des Sorbens 20 in der Desorptionskammer 19 werden beide Dampfverbindungen 10 mit den jeweils anderen Kammern 18, 19 verbunden, sodass diese ihre Funktionen wechseln. Das Sorbens 20 bleibt jeweils in derselben Kammer 18, 19, es werden keine Transporteinrichtungen 22 benötigt. Die Energiequelle 8 ist stets mit der jeweiligen Desorptionskammer 19 verbunden. Die Steuereinrichtung 23 ermöglicht die gestufte Sorption und Desorption, indem sie die jeweiligen Zugänge der Dampfverbindung 10 alternieret.

Das Sorbens 20 kann beispielsweise ein festes Adsorbens wie Zeolith oder Silikagel sein, oder, im Fall eines flüssigen Absorbens, beispielsweise Ammoniak oder Lithiumbromid. Prinzipell können auch gasförmige Sorbens eingesetzt werden.

In zwei alternativen Ausführungen gem. Fig. 3c und 3d kann die LTD Anlage 1 mit einer Aggregatseinrichtung 14 in Form eines Kompressors resp. einer Vakuumpumpe 24 (Fig. 3c) oder einer Strahldüse 25 (Fig. 3d) ausgestaltet sein zum Erzeugen eines Unterdrucks in der Unterkühlkammer 15 und eines Überdrucks in der Überhitzekammer 16. Durch jede der genannten Ausführungen der Aggregatseinrichtung 14 wird Dampf aus der Unterkühlkammer 15 abgesaugt und in die Überhitzekammer 16 eingebracht, unter gleichzeitiger Abkühlung der Unterkühlkammer 15 und Aufheizung der Überhitzekammer 16.

In all diesen Ausführungen wird die erforderliche Temperaturdifferenz für die gesamte LTD Anlage 1 zentral in der Aggregatseinrichtung 14 erzeugt. Dies erspart Wärmeverluste, die gezwungenermassen austreten, wenn Erwärmung und Abkühlung separat erzeugt werden, beispielsweise durch Heizungen, Ventilatoren oder Wärmetauscher.

Die erfindungsgemässe LTD Anlage 1 umfasst vorzugsweise eine Absaugvorrichtung 9 zum Absaugen von nicht kondensierbaren Gasen am Ende des Kondensationsprozesses in jedem Kondensor 3 und in der Überhitzekammer 16. Diese Absaugvorrichtung 9 wird bei Bedarf in Betrieb gesetzt, sobald der Druck in einer Kammer den Sättigungsdruck des vorhandenen Dampfes um mehr als einen vorgegebenen Wert übersteigt, der nur wenige Prozent beträgt.

Zum Betrieb der LTD Anlage 1 ist ein Zufluss von Mischflüssigkeit 5 vorgesehen, ein Abfluss von reiner Flüssigkeit 6 sowie ein Abfluss von Sole 13, welche eine höhere Konzentration an Salz oder/und an Schmutzstoffen aufweist als der Zufluss der Mischflüssigkeit 5.

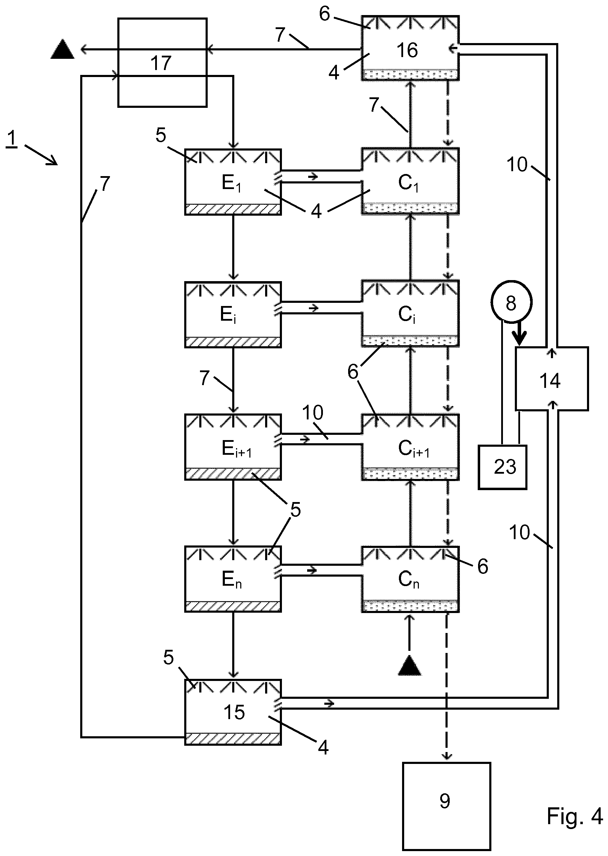

Gemäss Fig. 4 kann die erfindungsgemässe LTD Anlage 1 insbesondere eine mehrstufige Destillationsanlage verschiedener Mitteltemperaturen Tᵢ umfassen, mit i=1, 2, ...n, bei n Stufen. Bei einer solchen LTD Anlage 1 sind alle Verdampfer 2, hier bezeichnet mit Eᵢ resp. alle Kondensoren 3, hier bezeichnet mit Cᵢ, der jeweils verschiedenen Stufen i durch Leitungen 7 gegenläufig zu einem Kreislauf verbunden, wie bereits in Fig. 1b dargestellt und beschrieben. Aus Übersichtsgründen wurde auf die Darstellung der Verbindung zwischen dem Wärmetauscher 17 und dem kühlsten Kondensor Cₙ verzichtet; zwei Dreiecke stehen stellvertretend dafür ein.

Am Ende des Verdampferkreislaufs, d.h. nach dem kühlsten Verdampfer Eₙ, ist gleichsam die Unterkühlkammer 15 angeordnet, als wäre sie ein weiterer Verdampfer E. Zudem ist am Ende des Kondensorkreislaufs, d.h. nach dem wärmsten Kondensor C₁, gleichsam die Überhitzekammer 16 angeordnet, als wäre sie ein weiterer Kondensor C. Zwischen der Unterkühlkammer 15 und der Überhitzekammer 16 ist die Aggregatseinrichtung 14 angeordnet, welche durch Dampfverbindungen 10 mit diesen verbunden ist, wie bereits angegeben. Eine Steuereinheit 23 steuert nach Bedarf die Energiezufuhr durch die Energiequelle 8 und die Aggregatseinrichtung 14.

Im Unterschied zu allen Verdampfer-Kondensor Paaren Eᵢ, Cᵢ, i=1...n, deren Dampfräume 4 jeweils miteinander verbunden sind und somit dieselbe Mitteltemperatur Tᵢ haben, weisen die Temperaturen der Dampfräume 4 der Unterkühlkammer 15 und der Überhitzekammer 16 und somit auch der darin aufgefangenen Flüssigkeiten den grössten Unterschied der gesamten Anlage auf. Bereits die in diesen beiden Kammern 15, 16 eingelassenen Flüssigkeiten stammen, beim mehrstufigen Verfahren, aus dem kältesten Verdampfer Eₙ und dem wärmsten Kondensor C₁; ihre Temperaturdifferenz wird aber durch die Aggregatseinrichtung 14 erneut vergrössert. Die einzige Energiezufuhr zur Erzeugung der erforderliche Temperaturdifferenz der verschiedenen Verdampfer- und Kondensorstufen wird durch die Aggregatseinrichtung 14 in die Dampfräume der Unterkühlkammer 15 und der Überhitzekammer 16 eingebracht.

Die Darstellung in Fig. 4 versteht sich als Funktionsschema-Darstellung und nicht als räumlich optimierte Anordnungsvorgabe. Insbesondere wurde bei den Leitungen 7 im Kondensorkreiskauf darauf verzichtet, den Einlauf jeweils nach oben zu führen und den Auslauf von unten der Kammern C wegführen zu lassen, damit die Darstellung übersichtlich bleibt. Vorteilhaft ist einerseits, wenn aufgefangene Mischflüssigkeit 5 aus dem Verdampfer Eₙ der kühlsten Stufe in die Unterkühlkammer 15 einbringbar oder einsprühbar ist, und aufgefangene reine Flüssigkeit 6 aus dem Kondensor 3 der wärmsten Stufe C₁ in die Überhitzekammer 16 einsprühbar ist.

Andererseits ist es auch vorteilhaft, wenn im Wärmetauscher 17 abgekühlte reine Flüssigkeit 6 aus der Überhitzekammer 16 als Eingang in den kühlsten Kondensor Cₙ einsprühbar und die im Wärmetauscher 17 erhitzte Mischflüssigkeit 5 aus der Unterkühlkammer 15 als Eingang in den wärmsten Verdampfer E₁ einsprühbar oder einbringbar ist.

Zudem können auch (nicht dargestellte) Teilströme aus verschiedenen Kondensoren C oder Verdampfern E in Leitungen 7 und/oder Dampfleitungen 10 mit zu- oder wegführenden Leitungen 7 und/oder Dampfleitungen 10 der Aggregatseinrichtung 14 und/oder des Wärmetauschers 17 verbunden sein, um weitere thermische Verbesserungen zu erreichen, wobei auch Teilströme innerhalb des Wärmetauschers 17 zu- und/oder weggeführt werden können. Dadurch können gezielt kleinere Temperaturanpassungen in einzelnen Kondensoren C und/oder Verdampfern E erfolgen, ohne dass dazu externe Wärme erforderlich ist und ohne dass Wärme an die Umwelt verloren geht.

In einer weiter verbesserten LTD Anlage, die nicht dargestellt ist, sind weitere Dampfverbindungen 10 aus Dampfräumen 4 verschiedener Stufen mit Leitungen 7 zu Kondensoren Cᵢ anderer Stufen mit niedrigeren Mitteltemperaturen verbunden, zum Anheben des Drucks in den jeweiligen Leitungen 7. Dadurch kann zusätzlich zur Verringerung des Energieaufwandes zum Erzeugen von Temperaturdifferenzen auch der Energieverbrauch zum Erzeugen der geforderten Druckdifferenzen verringert werden. Die hier beschriebene erfindungsgemässe LTD Anlage 1 lässt sich problemlos mit anderen Optimierungsmethoden kombinieren.

Insbesondere kann die in der Aggregatseinrichtung 14 erzeugte Wärme in Teilströmen in mehrere Verdampfer 2 und/oder Kondensoren 3 verschiedener Stufen Eᵢ, Cᵢ sowie in die Überhitzekammer 16 verteilt werden. Dies kann beispielsweise dadurch erreicht werden, indem zusätzlich zum genannten Wärmetauscher 17 weitere Wärmetauscher angeordnet werden, welche zwischen verschiedenen Leitungen 7 gegenläufig angeordnet sind.

### Bezugszeichenliste

- 1: Nieder-Temperatur-Destillationsanlage (LTD Anlage)
- 2: E, Eᵢ Verdampfer
- 3: C, Ci Kondensor
- 4: Dampfraum
- 5: Mischflüssigkeit
- 6: Reine Flüssigkeit
- 7: Leitungen, Flüssigkeitsleitungen
- 8: Energiequelle, Wärmesenke
- 9: Absaugvorrichtung, V
- 10: Dampfverbindungen
- 11: Vorratsbecken an Mischflüssigkeit
- 12: Endbecken mit reiner Flüssigkeit, Destillat
- 13: Sole
- 14: Aggregatseinrichtung
- 15: Unterkühlkammer
- 16: Überhitzekammer
- 17: Wärmetauscher
- 18: Sorptionskammer
- 19: Desorptionskammer
- 20: Sorbens
- 21: Verbindungskanal
- 22: Transporteinrichtung
- 23: Steuereinrichtung
- 24: Kompressor, Vakuumpumpe
- 25: Strahldüse

## Patentansprüche

1. Nieder-Temperatur-Destillationsanlage (LTD Anlage) (1) mit einer oder mehreren Stufen (i) verschiedener Mitteltemperaturen Tᵢ, zur Destillierung einer Mischflüssigkeit (5) zu einer reinen Flüssigkeit (6), wobei jede Stufe einen Verdampfer (2, Eᵢ) mit einem Dampfraum (4) und mit einer wärmeren Tᵢ+ΔT einbringbaren Mischflüssigkeit (5) sowie einen Kondensor (3, Ci) mit einem Dampfraum (4) und mit einer kühleren Tᵢ-ΔT einsprühbaren reinen Flüssigkeit (6) aufweist, und wobei die Dampfräume (4) des Verdampfers (2, Eᵢ) und des Kondensors (3, Cᵢ) derart durch Dampfverbindungen (10) miteinander zu einem gemeinsamen Dampfraum (4) verbunden sind, dass sich der Druck und die Temperatur darin jederzeit ungehindert ausgleichen können, **gekennzeichnet durch** mindestens eine Aggregatseinrichtung (14), welche eingangsseitig mit dem Dampfraum einer Unterkühlkammer (15) verbunden ist, wobei in die Unterkühlkammer (15) aufgefangene Mischflüssigkeit (5) aus einem Verdampfer (2), bei mehreren Verdampfern (Eᵢ) aus dem der kühlsten Stufe (Eₙ) einbringbar ist, und ausgangsseitig mit dem Dampfraum einer Überhitzekammer (16) verbunden ist, wobei in die Überhitzekammer (16) aufgefangene reine Flüssigkeit (6) aus einem Kondensor (3), bei mehreren Kondensoren (Cᵢ) aus dem der wärmsten Stufe (C₁) einsprühbar ist, wobei die Aggregatseinrichtung (14) zudem mit einer Energiequelle (8) verbunden ist, zum Abkühlen der Temperatur in der Unterkühlkammer (15) und zum Erhitzen der Temperatur in der Überhitzekammer (16), wobei während dem Prozess Dampf von der Unterkühlkammer (15) über die Aggregatseinrichtung (14) zur Überhitzekammer (16) strömt, und wobei ein Wärmetauscher (17) zwischen den Ausgängen der Unterkühlkammer (15) und der Überhitzekammer (16) angeordnet ist zum Abkühlen der heissen aufgefangenen reinen Flüssigkeit (6) aus der Überhitzekammer (16) als Eingang in einen Kondensor (3), bei mehreren Kondensoren (Cᵢ) in den der kühlsten Stufe (Cₙ) sowie zum Erhitzen der kalten aufgefangenen Mischflüssigkeit (5) aus der Unterkühlkammer (15) als Eingang in einen Verdampfer (2), bei mehreren Verdampfern (Eᵢ) in den der wärmsten Stufe (E₁).

2. LTD Anlage nach Anspruch 1, **dadurch gekennzeichnet, dass** die Aggregatseinrichtung (14) mindestens eine Sorptionskammer (18) und/oder eine Desorptionskammer (19) mit einem Sorbens (20) umfasst, wobei mindestens zeitweise Dampf aus dem Dampfraum der Unterkühlkammer (15) im Sorbens (20) kondensiert und sorbiert werden kann und mindestens zeitweise reine Flüssigkeit (6) aus dem Sorbens (20) unter Zuführung von Energie (8) zu Dampf desorbiert und dem Dampfraum der Überhitzekammer (16) zugeführt werden kann.

3. LTD Anlage nach Anspruch 2, umfassend mindestens eine Sorptionskammer (18) und eine Desorptionskammer (19), **dadurch gekennzeichnet, dass** die Sorptionskammer (18) durch mindestens einen Verbindungskanal (21) mit der Desorptionskammer (19) verbunden ist und Transporteinrichtungen (22) für den Hin- und Rücktransport des Sorbens (20) zwischen der Sorptionskammer (18) und der Desorptionskammer (19) vorgesehen sind.

4. LTD Anlage nach Anspruch 3, **dadurch gekennzeichnet, dass** in der Sorptions- und Desorptionskammer (18, 19) abwechselnd ein Sorptions- und Desorptionsprozess durchgeführt werden kann.

5. LTD Anlage nach Anspruch 3, **dadurch gekennzeichnet, dass** die Sorptionskammer (18) mit der Desorptionskammer (19) durch mindestens zwei Verbindungskanäle (21) miteinander verbunden sind, die im Gebrauch stets dichtend mit durchrieselndem Sorbens gefüllt sind, sodass unter Mithilfe der Transporteinrichtungen (22) ein stufenloser Sorptions- und Desorptionsprozess durchgeführt werden kann.

6. LTD Anlage nach Anspruch 2, umfassend mindestens eine Sorptionskammer (18) und eine Desorptionskammer (19), **gekennzeichnet durch** eine Steuereinrichtung (23), welche die Funktionen von Sorptionskammer (18) und Desorptionskammer (19) periodisch tauscht zum Ermöglichen einer gestuften Sorption und Desorption, indem die Steuereinrichtung (23) die Dampfverbindungen (10) zur Unterkühlkammer (15) resp. zur Überhitzekammer (16) mit der jeweiligen Sorptionskammer (18) resp. Desorptionskammer (19) alternieren kann, und wobei die Energiequelle (8) stets mit der jeweiligen Desorptionskammer (19) verbunden ist.

7. LTD Anlage nach einem der Ansprüche 2 bis 6, **dadurch gekennzeichnet, dass** das Sorbens (20) Zeolith, Silikagel, Ammoniak oder Lithiumbromid ist.

8. LTD Anlage nach Anspruch 1, **dadurch gekennzeichnet, dass** die Aggregatseinrichtung einen Kompressor/eine Vakuumpumpe (24) oder Strahldüse (25) umfasst zum Erzeugen eines Unterdrucks in der Unterkühlkammer (15) und eines Überdrucks in der Überhitzekammer (16), wodurch Dampf aus der Unterkühlkammer (15) abgesaugt und in die Überhitzekammer (16) eingebracht wird, unter gleichzeitiger Abkühlung der Unterkühlkammer (15) und Aufheizung der Überhitzekammer (16).

9. LTD Anlage nach einem der vorhergehenden Ansprüche, **gekennzeichnet durch** eine Absaugvorrichtung (9) zum Absaugen von nicht kondensierbaren Gasen am Ende des Kondensationsprozesses in jedem Kondensor (3) und in der Überhitzekammer (16).

10. LTD Anlage nach einem der vorhergehenden Ansprüche, **gekennzeichnet durch** einen Zufluss von Mischflüssigkeit (5), einen Abfluss von reiner Flüssigkeit (6) sowie einen Abfluss von Sole (13).

11. LTD Anlage nach einem der vorhergehenden Ansprüche, **dadurch gekennzeichnet, dass** die Destillationsanlage mehreren Stufen verschiedener Mitteltemperaturen Tᵢ umfasst, wobei alle Verdampfer (2) resp. alle Kondensoren (3) der verschiedenen Stufen durch Leitungen (7) gegenläufig zu einem Kreislauf verbunden sind.

12. LTD nach Anspruch 11, **dadurch gekennzeichnet, dass** Dampfverbindungen (10) aus Dampfräumen (4) verschiedener Stufen mit Leitungen (7) zu Kondensoren (3) anderer Stufen mit niedrigeren Mitteltemperaturen verbunden sind, zum Anheben des Drucks in den jeweiligen Leitungen (7).

13. LTD Anlage nach einem der Ansprüche 11 oder 12, **dadurch gekennzeichnet, dass** die in der Aggregatseinrichtung (14) erzeugte Wärme in mehrere Verdampfer (2) verschiedener Stufen verteilt wird.

14. LTD Anlage nach einem der Ansprüche 11 bis 13, **dadurch gekennzeichnet, dass** aufgefangene Mischflüssigkeit (5) aus dem Verdampfer (2) der kühlsten Stufe in die Unterkühlkammer (15) einbringbar ist, und aufgefangene reine Flüssigkeit (6) aus dem Kondensor (3) der wärmsten Stufe in die Überhitzekammer (16) einsprühbar ist.

15. LTD Anlage nach einem der Ansprüche 11 bis 14, **dadurch gekennzeichnet, dass** die im Wärmetauscher (17) abgekühlte reine Flüssigkeit (6) aus der Überhitzekammer (16) als Eingang in den kühlsten Kondensor (3) einsprühbar und/oder die im Wärmetauscher (17) erhitzte Mischflüssigkeit (5) aus der Unterkühlkammer (15) als Eingang in den wärmsten Verdampfer (2) einbringbar ist.

16. LTD Anlage nach einem der vorhergehenden Ansprüche, **dadurch gekennzeichnet, dass** die in der Aggregatseinrichtung (14) erzeugte Wärme in Teilströmen in mehrere Verdampfer (2) und/oder Kondensoren (3) verschiedener Stufen (Eᵢ, Cᵢ) sowie in die Überhitzekammer (16) verteilt werden.

## Claims

1. A low-temperature distillation facility (LTD) (1) with one or more stages (i) having different mean temperatures Tᵢ, for distilling a mixed fluid (5) into a pure fluid (6), wherein each stage comprises an evaporator (2, Eᵢ) with a vapour space (4) and with a warmer Tᵢ+ΔT mixed fluid (5) which can be introduced, as well as a condenser (3, Cᵢ) with a vapour space (4) and with a cooler Tᵢ-ΔT pure fluid (6) which can be sprayed in, and wherein the vapour spaces (4) of the evaporator (2, Eᵢ) and of the condenser (3, Cᵢ) are connected to one another into a common vapour space (4) by way of vapour connections (10), in a manner such that the pressure and the temperature therein can equalise at all times in an unhindered manner, **characterised by** at least one aggregation device (14) which at the entry side is connected to the vapour space of a supercooling chamber (15), wherein captured mixed fluid (5) from an evaporator (2), with several evaporators (Eᵢ) from that of the coolest stage (Eₙ), can be brought into the supercooling chamber (15), and said aggregation device at the exit side is connected to the vapour space of a superheating chamber (16), wherein captured pure fluid (6) from a condenser (3), with several condensers (Cᵢ) from that of the warmest stage (C₁) can be sprayed into the superheating chamber (16), wherein the aggregation device (14) is moreover connected to an energy source (8), for cooling the temperature in the supercooling chamber (15) and for heating the temperature in the superheating chamber (16), wherein vapour flows from the supercooling chamber (15) to the superheating chamber (16) via the aggregation device (14) during the process, and wherein a heat exchanger (17) is arranged between the exits of the supercooling chamber (15) and of the superheating chamber (16), for cooling the hot captured pure fluid (6) from the superheating chamber (16), as the entry into the condenser (3), with several condensers (Cᵢ) into that of coolest stage (Cₙ), as well as for heating the cold, captured mixed fluid (5) from the supercooling chamber (15), as the entry into an evaporator (2), with several evaporators (Ei) into that of the warmest stage (E₁).

2. An LTD facility according to claim 1, **characterised in that** the aggregation device (14) comprises at least one sorption chamber (18) and/or a desorption chamber (19), with a sorbent (20), wherein at least temporarily, vapour from the vapour space of the supercooling chamber (15) can be condensed and sorbed in the sorbent (20), and at least temporarily, whilst inputting energy (8), pure fluid (6) can be desorbed out of the sorbent (20) into vapour and can be fed to the vapour space of the superheating chamber (16).

3. An LTD facility according to claim 2, comprising at least one sorption chamber (18) and a desorption chamber (19), **characterised in that** the sorption chamber (18) is connected to the desorption chamber (19) by way of at least one connecting channel (21), and transport devices (22) are provided to the forward and return transport of the sorbent (20) between the sorption chamber (18) and the desorption chamber (19).

4. An LTD facility according to claim 3, **characterised in that** a sorption process and a desorption process can be carried out in the sorption chamber and the desorption chamber (18, 19) in an alternating manner.

5. An LTD facility according to claim 3, **characterised in that** the sorption chamber (18) and the desorption chamber (19) are connected to one another by way of at least two connecting channels (21) which on use are constantly sealingly filled with the trickling-through sorbent, so that a stepless sorption and desorption process can be carried out with the help of the transport devices (22).

6. An LTD facility according to claim 2, comprising at least one sorption chamber (18) and a desorption chamber (19), **characterised by** a control device (23) which periodically exchanges the functions of the sorption chamber (18) and desorption chamber (19), for permitting a stepped sorption and desorption, by way of the control device (23) being able to alternatingly connect the vapour connections (10) to the supercooling chamber (15) or to the superheating chamber (16), to the respective sorption chamber (18) or desorption chamber (19), and wherein the energy source (8) is always connected to the respective desorption chamber (19).

7. An LTD facility according to one of the claims 2 to 6, **characterised in that** the sorbent (20) is zeolite, silica gel, ammonia or lithium bromide.

8. An LTD facility according to claim 1, **characterised in that** the aggregation device comprises a compressor / a vacuum pump (24) or spray nozzle (15), for producing a vacuum in the supercooling chamber (15) and an overpressure in the superheating chamber (16), by which means vapour is sucked out of the supercooling chamber (15) and is brought into the superheating chamber (16), amid the simultaneous cooing of the supercooling chamber (16) and heating of the superheating chamber (16).

9. An LTD facility according to one of the preceding claims, **characterised by** a suction device (9) for sucking away non-condensable gases at the end of the condensation process in each condenser (3) and in the superheating chamber (16).

10. An LTD facility according to one of the preceding claims, **characterised by** the feed of mixed fluid (5), a discharge of pure fluid (6) as well as a discharge of brine (13).

11. An LTD facility according to one of the preceding claims, **characterised in that** the distillation facility comprises several stages of different mean temperatures Tᵢ, wherein all evaporators (2) respectively all condensers (3) of the different stages are connected in opposite directions into a circuit, by way of conduits (7).

12. An LTD according to claim 11, **characterised in that** the vapour connections (10) of vapour spaces (4) of different stages are connected by conduits (7) to condensers (3) of other stages with lower mean temperatures, for lifting the pressure in the respective conduits (7).

13. An LTD facility according to one of the claims 11 to 12, **characterised in that** the heat which is produced in the aggregation device (14) is distributed into several evaporators (2) of different stages.

14. An LTD facility according to one of the claims 11 to 13, **characterised in that** captured mixed fluid (5) can be brought out of the evaporator (2) of the coolest stage into the supercooling chamber (15), and the captured pure fluid (6) from the condenser (3) of the warmest stage can be sprayed into the superheating chamber (16).

15. An LTD facility according to one of the claims 11 to 14, **characterised in that** the pure fluid (6) from the superheating chamber (16) and cooled in the heat exchanger (17) can be spayed in at the entry into the coolest condenser (3), and/or the mixed fluid (5) from the supercooling chamber (15) and heated in the heat exchanger (17) can be brought in at the entry into the warmest evaporator (2)

16. An LTD facility according to one of the preceding claims, **characterised in that** the heat produced in the aggregation device (14) is distributed in part-flows into several evaporators (2) and/or condensers (3) of different stages (Eᵢ, Cᵢ) as well as into the superheating chamber (16).

## Revendications

1. Installation de distillation à basse température (installation DBT) (1) avec un ou plusieurs niveaux (i) de températures moyennes différentes Tᵢ, pour distiller un liquide de mélange (5) en un liquide pur (6), sachant que chaque niveau comporte un évaporateur (2, Eᵢ) avec un compartiment de vapeur (4) et avec un liquide de mélange (5) pouvant être introduit plus chaud Tᵢ+ΔT ainsi qu'un condenseur (3, Cᵢ) avec un compartiment de vapeur (4) et avec un liquide (6) pur pulvérisable plus froid Tᵢ-ΔT et sachant que les compartiments de vapeur (4) de l'évaporateur (2, Eᵢ) et du condenseur (3, Cᵢ) sont reliés entre eux par des liaisons de vapeur (10) en un compartiment de vapeur commun (4) de telle sorte que la pression et la température à l'intérieur peuvent être compensées à tout moment librement, **caractérisée par** au moins un système d'ensemble (14), lequel est relié côté entrée au compartiment de vapeur d'une chambre de sous-refroidissement (15), sachant que du liquide de mélange (5) recueilli venant d'un évaporateur (2), pour plusieurs évaporateurs (Eᵢ) venant du niveau le plus froid (Eₙ) peut être introduit dans la chambre de sous-refroidissement (15) et est relié côté sortie au compartiment de vapeur d'une chambre de surchauffe (16), sachant que du liquide pur recueilli (6) venant d'un condenseur (3), pour plusieurs condenseurs (Cᵢ) venant du niveau le plus chaud (C₁) peut être pulvérisé dans la chambre de surchauffe (16), sachant que le système d'ensemble (14) est relié en outre à une source d'énergie (8) pour refroidir la température dans la chambre de sous-refroidissement (15) et pour chauffer la température dans la chambre de surchauffe (16), sachant que pendant le processus, la vapeur s'écoule de la chambre de sous-refroidissement (15) par le système d'ensemble (14) vers la chambre de surchauffe (16) et sachant qu'un échangeur de chaleur (17) est disposé entre les sorties de la chambre de sous-refroidissement (15) et de la chambre de surchauffe (16) pour refroidir le liquide pur recueilli chaud (6) venant de la chambre de surchauffe (16) en tant qu'entrée dans un condenseur (3), pour plusieurs condenseurs (Cᵢ) dans le niveau le plus froid (Cₙ) ainsi que pour chauffer le liquide de mélange (5) recueilli froid venant de la chambre de sous-refroidissement (15) en tant qu'entrée dans un évaporateur (2), pour plusieurs évaporateurs (Eᵢ) dans le niveau le plus chaud (E₁).

2. Installation DBT selon la revendication 1, **caractérisée en ce que** le dispositif d'ensemble (14) comprend au moins une chambre d'absorption (18) et/ou une chambre de désorption (19) avec un sorbant (20), sachant qu'au moins par moments de la vapeur peut être condensée et absorbée du compartiment de vapeur de la chambre de sous-refroidissement (15) dans le sorbant (20) et au moins par moments du liquide pur (6) peut être désorbé du sorbant (20) avec apport d'énergie (8) à la vapeur et être acheminé au compartiment de vapeur de la chambre de surchauffe (16).

3. Installation DBT selon la revendication 2, comprenant au moins une chambre d'absorption (18) et une chambre de désorption (19), **caractérisée en ce que** la chambre d'absorption (18) est reliée par au moins un conduit de liaison (21) à la chambre de désorption (19) et des dispositifs de transport (22) pour le transport aller et le transport retour du sorbant (20) sont prévus entre la chambre d'absorption (18) et la chambre de désorption (19).

4. Installation DBT selon la revendication 3, **caractérisée en ce qu'**un processus d'absorption et de désorption peut être effectué en alternance dans la chambre d'absorption et la chambre de désorption (18, 19).

5. Installation DBT selon la revendication 3, **caractérisée en ce que** la chambre d'absorption (18) et la chambre de désorption (19) sont reliées entre elles par au moins deux conduits de liaison (21), qui sont remplis en usage toujours de façon étanche de sorbant ruisselant à travers, de telle manière qu'à l'aide des dispositifs de transport (22), un processus d'absorption et de désorption en continu peut être effectué.

6. Installation DBT selon la revendication 2, comprenant au moins une chambre d'absorption (18) et une chambre de désorption (19), **caractérisée par** un dispositif de commande (23), lequel change périodiquement les fonctionnements de la chambre d'absorption (18) et de la chambre de désorption (19) pour permettre une absorption et désorption échelonnée dans laquelle le dispositif de commande (23) peut alterner les liaison de vapeur (10) vers la chambre de sous-refroidissement (15) ou respectivement vers la chambre de surchauffe (16) avec la chambre d'absorption (18) ou respectivement la chambre de désorption (19) respective et sachant que la source d'énergie (8) est toujours reliée à la chambre de désorption (19) respective.

7. Installation DBT selon l'une quelconque des revendications 2 à 6, **caractérisée en ce que** le sorbant (20) est de la zéolithe, du gel de silice, de l'ammoniac ou du bromure de lithium.

8. Installation DBT selon la revendication 1, **caractérisée en ce que** le système d'ensemble comprend un compresseur/une pompe à vide (24) ou une buse de projection (25) pour produire une dépression dans la chambre de sous-refroidissement (15) et une surpression dans la chambre de surchauffe (16), ce par quoi la vapeur venant de la chambre de sous-refroidissement (15) est aspirée et est introduite dans la chambre de surchauffe (16) avec refroidissement simultané de la chambre de sous-refroidissement (15) et chauffage de la chambre de surchauffe (16).

9. Installation DBT selon l'une quelconque des revendications précédentes, **caractérisée par** un dispositif d'aspiration (9) pour aspirer des gaz non condensables à la fin du processus de condensation dans chaque condenseur (3) et dans la chambre de surchauffe (16).

10. Installation DBT selon l'une quelconque des revendications précédentes, **caractérisée par** une arrivée de liquide de mélange (5), un écoulement de liquide pur (6) ainsi qu'un écoulement d'eau salée (13).

11. Installation DBT selon l'une quelconque des revendications précédentes, **caractérisée en ce que** l'installation de distillation comprend plusieurs niveaux de températures moyennes différentes (Tᵢ), sachant que tous les évaporateurs (2) ou respectivement tous les condenseurs (3) des différents niveaux sont reliés à un circuit par des conduits (7) dans le sens opposé.

12. Installation DBT selon la revendication 11, **caractérisée en ce que** les liaisons de vapeur (10) des compartiments de vapeur (4) de différents niveaux sont reliées avec des conduits (7) aux condenseurs (3) d'autres niveaux avec des températures moyennes plus basses pour augmenter la pression dans les conduits respectifs (7).

13. Installation DBT selon l'une quelconque des revendications 11 ou 12, **caractérisée en ce que** la chaleur produite dans le système d'ensemble (14) est répartie dans plusieurs évaporateurs (2) de niveaux différents.

14. Installation DBT selon l'une quelconque des revendications 11 à 13, **caractérisée en ce que** du liquide de mélange recueilli (5) venant de l'évaporateur (2) du niveau le plus froid peut être introduit dans la chambre de sous-refroidissement (15) et du liquide pur recueilli (6) venant du condenseur (3) du niveau le plus chaud, peut être pulvérisé dans la chambre de surchauffe (16).

15. Installation DBT selon l'une quelconque des revendications 11 à 14, **caractérisée en ce que** le liquide (6) pur refroidi dans l'échangeur de chaleur (17) venant de la chambre de surchauffe (16) peut être pulvérisée dans le condenseur le plus froid (3) en tant qu'entrée et/ou le liquide de mélange (5) chauffé dans l'échangeur de chaleur (17) venant de la chambre de sous-refroidissement (15) peut être introduit en tant qu'entrée dans l'évaporateur le plus chaud (2).

16. Installation DBT selon l'une quelconque des revendications précédentes, **caractérisée en ce que** la chaleur produite dans le système d'ensemble (14) est répartie en flux partiels dans plusieurs évaporateurs (2) et/ou condenseurs (3) de différents niveaux (Eᵢ, Cᵢ) ainsi que dans la chambre de surchauffe (16).
